# EUROPEAN PATENT SPECIFICATION

(11) **EP 2 307 468 B1**
(45) Date of publication and mention of the grant of the patent: **13.06.2012**
(21) Application number: 08786249.6
(22) Date of filing: 18.07.2008
(51) Int. Cl.: C08F 36/04, C08F 4/64

(54) **TYRE AND CROSSLINKABLE ELASTOMERIC COMPOSITION COMPRISING AN ISOTACTIC COPOLYMER OBTAINED BY HOMOGENOUS CATALYSIS**
REIFEN UND VERNETZBARE ELASTOMERE ZUSAMMENSETZUNG, UMFASSEND EIN DURCH HOMOGENE KATALYSE ERHALTENES ISOTAKTISCHES COPOLYMER
PNEU ET COMPOSITION ÉLASTOMÈRE RÉTICULABLE COMPRENANT UN COPOLYMÈRE ISOTACTIQUE OBTENU PAR CATALYSE HOMOGÈNE

(43) Date of publication of application: 13.04.2011
(73) Proprietor: Pirelli Tyre S.P.A., 20126 Milan (IT)
(72) Inventor: PROTO, Antonio, I-84084 Fisciano (IT); CAPACCHIONE, Carmine, I-84084 Fisciano (IT); CAPRIO, Michela, I-20126 Milano (IT); NAHMIAS NANNI, Marco, I-20126 Milano (IT)
(74) Representative: Allaix, Roberto
(86) International application number: PCT/EP2008/059469
(87) International publication number: WO 2010/006655

(56) References cited:
- LONGO P ET AL: "CHEMOSELECTIVITY IN 4-METHYL-1,3-PENTADIENE POLYMERIZATION IN THE PRESENCE OF HOMOGENEOUS TI-BASED CATALYSTS" MACROMOLECULAR: RAPID COMMUNICATIONS, WILEY VCH VERLAG, WEINHEIM, DE, vol. 18, no. 2, 1 February 1997 (1997-02-01), pages 183-190, XP000684269 ISSN: 1022-1336
- PROTO ET AL: "Synthesis of Isotactic Poly-1,2-(4-methyl-1,3-pentadiene) by a Homogeneous Titanium Catalyst" 20031202, 2 December 2003 (2003-12-02), XP002285884
- CARMINE CAPACCHIONE ET AL: "Copolymerization of Ethylene with Styrene Catalyzed by a Linked Bis(phenolato) Titanium Catalyst" JOURNAL OF POLYMER SCIENCE - PART A - POLYMER CHEMISTRY, WILEY & SONS, HOBOKEN, NJ, US, vol. 44, 1 January 2006 (2006-01-01), pages 1908-1913, XP007907923 ISSN: 0887-624X

## Description

### FIELD OF THE INVENTION

The present invention generally relates to a tyre manufactured by a crosslinkable elastomeric composition comprising an elastomeric copolymer obtained through a copolymerization process of an olefin monomer with a diene monomer.

More in particular, the present invention relates to a tyre manufactured by a crosslinkable elastomeric composition comprising an elastomeric copolymer, preferably with an isotactic configuration, obtained through a copolymerization process of an olefin monomer, preferably ethylene, with a 4,4'-disubstituted diene monomer, typically 4-methyl-1,3-pentadiene, in the presence of a metallo-organic homogenous catalyst.

### BACKGROUND OF THE INVENTION

The copolymers of olefin monomers with diene-conjugated monomers are commercially interesting for several applications, including the manufacturing of crosslinkable materials.

The incorporation of unsaturated bonds along polyolefinic chain has a large interest for many industrial applications including the developing of vulcanizable materials for the tyre industry.

Copolymerization of ethylene with conjugated monomers such as butadiene or isoprene was investigated since the early times from the discover of Ziegler-Natta catalysts until present by developing new homogeneous catalysts based on rare earth and transition metals.

Unfortunately, olefin monomers and diene-conjugated monomers polymerize with two different mechanisms, and only a limited number of catalysts are able to copolymerize them successfully.

The copolymerization of an olefin monomer with a diene monomer can proceed by cis-1,4-addition, trans-1,4-addition and 1,2-addition. The 1,2-addition results in copolymers which can have a isotactic, syndiotactic, or atactic configuration.

Isotactic copolymers have the all pendant substituents located on the same side of the polymer chain. Syndiotactic polymers have the pendant substituents disposed regularly on alternated sides of the polymer chain. Atactic polymers have the pendant substituents disposed randomly along the polymer chain.

The copolymerization of ethylene and butadiene with a main trans-1,4 configuration with a metallo-organic catalyst is disclosed in EP 1 829 901 and in J. Thuilliez, V. Monteil, R. Spitz, C. Boisson, "Altemating Copolymerization of Ethylene and Butadiene with a Neodymocene Catalyst", Angew. Chem. Int. Ed. 2005, 44, 2593.

The copolymerization of ethylene and 4-methyl-1,3-pentadiene (4MPD) is disclosed in P. Longo, F. Grisi, A. Proto, "Chemoselectivity in 4-methyl-1,3-pentadiene polymerization in the presence of homogeneous Ti-based catalysts" Macromol. Rapid Commun. 18, 183-190 (1997). This work clearly discloses that ethylene and 4-methyl-1,3-pentadiene copolymerize at random with a considerable amount of 4MPD units bonded in 1,4 configuration. The authors observed that in previous works the very same catalyst was able to promote the 1,2-syndiotactic specific polymerization of 4MPD homopolymer.

Recently, the synthesis of a homogenous metallo-organic catalyst comprising a bisphenolate ligand systems forming a complex with transition metal compounds, including titanium compounds, has been described in PCT Application WO2004/078765. The catalyst system has been described as useful for the production of isotactic polystyrene.

Such a catalyst system, and in particular a catalyst system obtained by reacting a 1,ω-dithiaalkanediyl-2,2'-bis(4,6-di-tert-butyl-phenol) with titanium chloride, has been employed in the synthesis of polymers and copolymers of olefins like ethylene, propylene and styrene (C. Capacchione, A. Proto, H. Ebeling, R. Mülhaupt, K. Möller, T. P. Spaniol, J. Okuda, "Ancillary Ligand Effect on Single-Site Styrene Polymerization: Isospecificity of Group 4 Metal Bis(phenolate) Catalysts", J. Am. Chem. Soc. 2003, 125, 4964 - C. Capacchione, A. Proto, H. Ebeling ,R. Mülhaupt, J. Okuda, "Copolymerization of ethylene with styrene catalyzed by a linked bis(phenolato) titanium catalyst", J. Polym. Sci. Part A: Polym. Chem. 2006, 44, 1908 - C. Capacchione, F. De Carlo, C. Zannoni, J. Okuda, A. Proto, "Propylene-Styrene Multiblock Copolymers: Evidence for Monomer Enchainment via Opposite Insertion Regiochemistry by a Single-Site Catalyst" Macromolecules, 2004, 24, 8918).

The same catalyst system has been described to be used in the synthesis of a isotactic homopolymer of 4MPD (A. Proto, C. Capacchione, V. Venditto, J. Okuda, "Synthesis of Isotactic Poly-1,2-(4-methyl-1,3-pentadiene) by a Homogeneous Titanium Catalyst", Macromolecules. 2003, 36, 9249) and in the synthesis of branched polyethylene (C. Capacchione, A. Proto, J. Okuda, "Synthesis of Branched Polyethylene by Ethylene Homopolymerization Using Titanium Catalysts that Contain a Bridged Bis(phenolate) Ligand", Journal of Polymer Science: Part A: Polymer Chemistry, Vol. 42, 2815-2822 (2004).

### SUMMARY OF THE INVENTION

The Applicant has surprisingly found that the use of a 1,ω-dithiaalkanediyl-2,2'-bis(4,6-di-tert-butyl-phenol) titanium chloride catalyst system allows to obtain a copolymer of an olefin monomer, like ethylene, with a 4,4'-disubstituted diene monomer, like 4-methyl-1,3-pentadiene with a high chemoselectivity.

For sake of clarity, the expression 4,4'-disubstituted diene monomer means a monomer comprising two double bonds and having two substituents in the 4-position thereof.

More in particular, the Applicant has surprisingly found that, when the copolymerization process is conducted in the presence of the above mentioned catalyst system, the diene addition only proceeds through the 1,2-position, i.e., involves only the unsubstituted double bond.

Further, the Applicant has also unexpectedly found that the resulting copolymer has an isotactic configuration wherein most pendant substituted alkylene groups are located on the same side of the polymeric chain.

The Applicant has surprisingly found that the resulting copolymer is easily crosslinkable, resulting in a crosslinked composition having a high glass transition temperature (Tg), and then it is particularly useful for all the applications requiring a vulcanization process of a polymeric composition, such as, for example, for the manufacturing of a tyre.

Additionally, the Applicant has surprisingly found that the copolymerization process of olefin monomers and diene monomers employing 1,ω-dithiaalkanediyl-2,2'-bis(4,6-di-tert-butyl-phenol) titanium chloride catalyst system provides high yield and high catalytic activity, even higher than those obtained with known catalyst system for this kind of reactions (such as those of P. Longo et al., cited above).

Further, the Applicant has found that the copolymerization process can be conducted at room temperature and normal atmospheric pressure, with several advantages in terms of costs and safety of the industrial process.

Accordingly, in a first aspect the present invention relates to a tyre comprising at least one structural element obtained by crosslinking a crosslinkable elastomeric composition comprising an olefin diene copolymer, wherein said olefin diene copolymer comprises an olefin monomer and a 4,4'-disubstituted diene monomer, preferably wherein more than 50% of the 4,4'-disubstituted diene monomer units are linked in the polymeric chain in the 1,2-configuration, and preferably wherein said olefin diene copolymer comprises from 5 to 95 molar percent of an olefin monomer and from 95 to 5 molar percent of a 4,4'-disubstituted diene monomer.

In a preferred embodiment, more than 70%, and most preferably more than 80%, of the 4,4'-disubstituted diene monomer units are linked in the polymeric chain in the 1,2-configuration.

In a more preferred embodiment, said at least one structural element obtained by crosslinking a crosslinkable elastomeric composition comprising said olefin diene copolymer is the tread band or the side walls.

In a second aspect, the present invention relates to a crosslinkable elastomeric composition comprising the above described olefin diene copolymer.

In a third aspect, the present invention relates to a copolymerization process of an olefin monomer with a 4,4'-disubstituted diene monomer comprising a homogeneous catalyst system, wherein said homogeneous catalyst system is a bisphenolate ligand system having the following general formula: 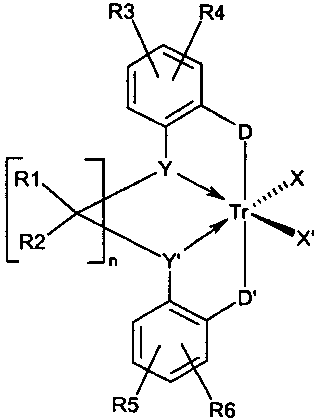 wherein
Tr is a transition metal,
X and X', equal or different each other, are a halogen atom,
R₁ and R₂, equal or different each other, are an hydrogen atom or a linear or branched alkyl group having from 1 to 10 carbon atoms
R₃ to R₆, equal or different each other, are an hydrogen atom or a linear or branched alkyl group having from 1 to 10 carbon atoms,
Y and Y', equal or different each other, are an oxygen, sulfur, selenium, tellurium atom, or a NR₇ or PR₇ group,
D and D', equal or different each other, are an oxygen, sulfur, selenium, tellurium atom, or a NR₇ or PR₇ group,
R₇ is an hydrogen atom or a linear or branched alkyl group having from 1 to 10 carbon atoms, and
n is an integer from 1 to 10.

In a fourth aspect, the present invention relates to the use of a bisphenolate ligand system having the following general formula: 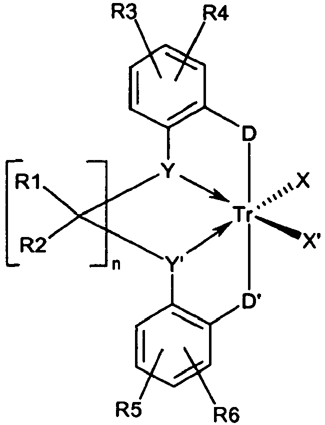 wherein Tr, X, X', R₁ to R₇, Y, Y', D, D', and n are defined as above in a copolymerization process of an olefin monomer with a 4,4'-disubstituted diene monomer.

In a fifth aspect, the present invention relates to an olefin diene copolymer, wherein said olefin diene copolymer comprises an olefin monomer and a 4,4'-disubstituted diene monomer, and wherein more than 80% of the substituted alkylene groups pendant from the polymeric chain have a isotactic configuration and more than 50% of said 4,4-disubstituted diene monomer units one linked in the polymeric chain in the 1,2-configuration

Preferably, said olefin diene copolymer comprises from 5 to 95 molar percent of an olefin monomer and from 95 to 5 molar percent of 4,4'-disubstituted diene monomer.

### DETAILED DESCRIPTION OF THE INVENTION

The present invention, in at least one of the abovementioned aspects, may show one or more of the preferred characteristics hereinafter described.

According to one preferred embodiment, the olefin diene copolymer of the present invention comprises from 20 to 80 molar percent of an olefin monomer and from 80 to 20 molar percent of a 4,4'-disubstituted diene monomer.

More preferably, the olefin diene copolymer of the present invention comprises from 30 to 70 molar percent of an olefin monomer and from 70 to 30 molar percent of a 4,4'-disubstituted diene monomer.

In a still more preferred embodiment, the olefin diene copolymer comprises from 40 to 60 molar percent of an olefin monomer and from 60 to 40 molar percent of a 4,4'-disubstituted diene monomer.

The olefin diene copolymer preferably comprises more than 90%, and more preferably more than 95% of the 4,4'-disubstituted diene monomer units linked in the polymeric chain in the 1,2-configuration. Most preferably, the olefin diene copolymer comprises more than 98% of the 4,4'-disubstituted diene monomer units linked in the polymeric chain in the 1,2-configuration

The olefin diene copolymer of the present invention preferably comprises a regular polymeric sequence alternating one unit of olefin monomer (E) and one unit of 4,4'-disubstituted diene monomer (D) along the chain, which can be represented with the following sequence:
.....-E-D-E-D-E-D-E-D-.......

For sake of clarity, the above sequence will be referred as sequence DED.

However, the olefin diene copolymer of the present invention can comprise a certain amount of different sequences, such as, for example, sequence DEE, wherein two olefin monomer units follow a 4,4'-disubstituted diene monomer unit, or sequence EDD, wherein two 4,4'-disubstituted diene monomer units follow a olefin monomer unit. The presence of such sequences has been particularly observed when an excess of one monomer is added to the copolymerization process. However, the amount of such sequences in the polymeric chain or the olefin diene copolymer of the present invention should preferably not exceed 5% mol, and more preferably is below 3% mol.

Suitable olefin monomers include α-olefins and cyclic olefins, and mixtures thereof. Ethylene, propylene, 1-butene, 1-pentene, 1-hexene, 1-octene, and mixtures thereof are particularly preferred. Ethylene and propylene are most preferred.

Useful 4,4'-disubstituted diene monomers include those represented by the following general formula: 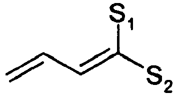 wherein S₁ and S₂, equal or different each other, are selected from non-polar atoms and non-polar organic groups.

Preferably, S₁ and S₂, equal or different each other, are selected from halogen atoms, linear or branched alkyl groups having preferably from 1 to 10 carbon atoms, cycloalkyls groups having preferably from 3 to 10 carbon atoms, aryl group having preferably from 6 to 10 carbon atoms, alkylaryl groups having preferably from 7 to 15 carbon atoms, arylalkyl groups having preferably from 7 to 15 carbon atoms, wherein one or more carbon atoms are optionally replaced by a heteroatom selected from O, S, and N.

Suitable 4,4'-disubstituted diene monomers include 4,4'-dichloro-1,3-butadiene, 4,4'-dibromo-1,3-butadiene, 4-chloro-1,3-pentadiene, 4-methyl-1,3-pentadiene, 4-methoxy-1,3-pentadiene, 4-methylthio-1,3-pentadiene, 4-methylamino-1,3-pentadiene, 4-cydoh exyl-1,3-pentadiene, 4-methyl-1,3-hexadiene, 4-ethyl-1,3-hexadiene, 4-ethyl-1,3-heptadiene 4-butyl-1,3-octadiene, or mixtures thereof. 4-methoxy-1,3-pentadiene is the most preferred 4,4'-disubstituted diene monomer.

The olefin diene copolymer of the present invention preferably shows a isotactic configuration, wherein more than 80%, preferably more than 90%, and most preferably more than 95% of the substituted alkylene groups pendant from the polymeric chain as a result of the 1,2-addition of the 4,4'-disubstituted diene monomer units are oriented on the same side of the polymeric chain, as illustrated, for example, in the following scheme:

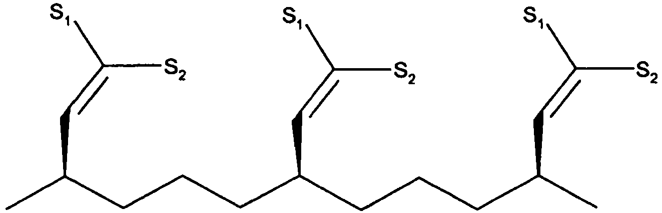

The olefin diene copolymer of the present invention shows a regular structure with a high number of double bonds able to react with conventional crosslinking agents, such as, the conventional vulcanizing agents employed in the rubber industry.

The olefin diene copolymer of the present invention shows a high glass transition temperature (Tg) and/or a high melting point temperature (Tmp), well higher than elastomeric polymers conventionally employed in the rubber industry like polyisoprene rubber or styrene butadiene rubber. The Tg of the olefin diene copolymer of the present invention ranges from -20°C to 90°C, preferably from 0°C to 70°C. The Tmp of the olefin diene copolymer of the present invention ranges from 50 to 180°C, preferably from 80° to 150°C.

The olefin diene copolymer of the present invention will preferably have a weight average molecular weight (Mw) within the range of from 1 x10³ to 1 x10⁵, preferably from 0.5x10⁴ to 5.0x10⁴. It is preferred for the copolymer to have a polydispersity index which is within the range of from 1.0 to 3.0, preferably from 1.0 to 2.0. Polydispersity index is defined by the ratio (Mw/Mn).

In a second aspect, the present invention relates to a crosslinkable elastomeric composition comprising the above described olefin diene copolymer.

The olefin diene copolymer of the present invention are particularly useful in the formulation of crosslinkable elastomeric compositions useful in the manufacturing of tyre. The olefin diene copolymer of the present invention can be used alone or blended with at least one additional elastomeric polymer. The crosslinkable elastomeric composition can comprise up to 100 phr of olefin diene copolymer of the present invention, preferably from 5 to 70 phr, and more preferably from 5 to 30 phr.

For the purposes of the present description and of the claims which follow the term "phr" means the parts by weight of a given component of the crosslinkable elastomeric composition per 100 parts by weight of the elastomeric polymer(s).

Said at least one elastomeric polymer may be selected, for example, from (a₁) diene elastomeric polymers which are commonly used in sulfur-crosslinkable elastomeric compositions, that are particularly suitable for producing tyres, that is to say from elastomeric polymers or copolymers with an unsaturated chain having a glass transition temperature (Tg) generally below 20°C, typically in the range of from about 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers.

Preferably, said diene elastomeric polymer (a₁) may be selected, for example, from: cis-1,4-polyisoprene (natural or synthetic, preferably natural rubber), 3,4-polyisoprene, polybutadiene (in particular, polybutadiene with a high 1,4-cis content), optionally halogenated isoprene/isobutene copolymers, 1,3-butadiene/acrylonitrile copolymers, stirene/1,3-butadiene copolymers, stirene/isoprene/1,3-butadiene copolymers, stirene/1,3-butadiene/acrylonitrile copolymers, or mixtures thereof.

Natural rubber and polyisoprene rubber are preferably employed for internal structural elements, such as, for example, bead filler. Other synthetic rubbers like butadiene rubbers and styrene/butadiene rubbers, are preferably employed for external structural elements, such as, for example, tread band, sidewall, tread underlayer and sidewall inserts.

Alternatively, said at least one elastomeric polymer may be selected, for example, from (a₂) elastomeric polymers of one or more monoolefins with an olefinic comonomer or derivatives thereof. The monoolefins may be selected, for example, from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbomene, vinyinorbornene, or mixtures thereof. Among these, the following are particularly preferred: ethylene/propylene copolymers (EPR) or ethylene/propylene/diene copolymers (EPDM); poly-isobutene; butyl rubbers; halobutyl rubbers, in particular chlorobutyl or bromobutyl rubbers; or mixtures thereof.

Mixtures of the abovementioned diene elastomeric polymers (a₁) with the abovementioned elastomeric polymers (a₂), may also be used in combination with the olefin diene copolymer of the present invention.

The above described crosslinkable elastomeric compositions comprising the olefin diene copolymer of the present invention can be compounded utilizing conventional ingredients and standard techniques.

For instance, the crosslinkable elastomeric compositions are typically blended with carbon black, sulfur, fillers, accelerators, oils, waxes, scorch inhibiting agents, and processing aids. In most cases, the crosslinkable elastomeric compositions of the present invention are compounded with sulfur and/or a sulfur containing compound, at least one filler, at least one accelerator, at least one antidegradant, at least one processing oil, zinc oxide, optionally a tackifier resin, optionally a reinforcing resin, optionally one or more fatty acids, optionally a peptizer and optionally one or more scorch inhibiting agents.

Normally from about 0.1 phr to about 120 phr, preferably from about 20 phr to about 90 phr, of at least one filler will be utilized in the blend with 30 phr to 80 phr being the most preferred. In most cases at least some carbon black will be utilized in the filler. The filler can, of course, be totally carbon black. Silica can be included in the filler to improve tear resistance and heat build up. According to one preferred embodiment, said silica reinforcing filler may be selected, for example, from: pyrogenic silica, precipitated amorphous silica, wet silica (hydrated silicic acid), dry silica (anhydrous silicic acid), fumed silica, vegetal silica (i.e., silica obtained from agricultural waste, like rice hulls and rice straw), calcium silicate, or mixtures thereof. Other suitable fillers include aluminum silicate, magnesium silicate, or mixtures thereof. Among these, precipitated amorphous wet-process, hydrated silicas are preferred. These silicas are so-called because they are produced by a chemical reaction in water, from which they are precipitated as ultrafine, spherical particles. These primary particles strongly associate into aggregates, which in turn combine less strongly into agglomerates.

The crosslinkable elastomeric compositions above reported may be vulcanized according to known techniques, in particular with sulfur-based vulcanizing systems commonly used for elastomeric polymers. To this end, in the composition, after one or more steps of thermomechanical processing, a sulfur-based vulcanizing agent is incorporated, preferably together with vulcanization accelerators, activators and/or retardants known to those skilled in the art. In the final processing step, the temperature is generally kept below 120°C and preferably below 100°C, so as to avoid any unwanted pre-crosslinking phenomena.

The vulcanizing agent most advantageously used is sulfur, or molecules containing sulfur (sulfur donors).

Said sulfur or derivatives thereof may be selected, for example, from (i) soluble sulfur (crystalline sulfur); (ii) insoluble sulfur (polymeric sulfur); (iii) sulfur dispersed in oil (for example 33% sulfur known under the trade name Crystex^{®} OT33 from Flexsys); (iv) sulfur donors such as, for example, tetramethylthiuram disulphide (TMTD), tetrabenzylthiuram disulphide (TBzTD), tetraethylthiuram disulphide (TETD), tetrabutylthiuram disulphide (TBTD), dimethyldiphenylthiuram disulphide (MPTD), pentamethylenethiuram tetrasulphide or hexasulphide (DPTT), morpholinobenzothiazole disulphide (MBSS), N-oxydiethylenedithiocarbamyl-N'-oxydiethylenesulphenamide (OTOS), dithiodimorpholine (DTM or DTDM), caprolactam disulphide (CLD); or mixtures thereof.

Said sulfur or derivatives thereof are preferably employed in the crosslinkable elastomeric composition of the present invention in an amount of from 0.05 phr to 10 phr, more preferably from 0.1 phr to 5 phr, and even more preferably from 0.2 phr to 2 phr.

The crosslinkable elastomeric compositions of the present invention will also normally include from 0.5 phr to 10 phr, more preferably of from 1 phr to 5 phr, and even more preferably of from 1.5 phr to 3.5 phr of at least one vulcanization activators, from 0.05 phr to 10 phr, more preferably from 0.1 phr to 5 phr, and even more preferably from 0.5 phr to 3 phr of at least one vulcanization accelerators, and from 0.001 phr to 1 phr, more preferably from 0.005 phr to 0.5 phr, and even more preferably from 0.01 phr to 0.3 phr of at least one vulcanization retardants.

Antidegradants, such as antioxidants and antiozonants, will generally be included in the crosslinkable elastomeric compositions of the present invention in amounts ranging from 0.25 to 10 phr with amounts in the range of 1 to 5 phr being preferred. Processing oils will generally be included in the compositions in amounts ranging from 2 to 100 phr with amounts ranging from 5 to 50 phr being preferred. The compositions will also normally contain from 0.5 to 10 phr of zinc oxide with 1 to 5 phr being preferred. These compositions can optionally contain from 0 to 10 phr of tackifier resins, 0 to 10 phr of reinforcing resins, and 1 to 10 phr of fatty acids.

The crosslinkable elastomeric compositions of the present invention can be used in tyre industry in conjunction with ordinary tyre manufacturing techniques. Tyres are built utilizing standard procedures with the crosslinkable elastomeric compositions of the present invention. The tyres can include one or more of their elements comprising the crosslinkable elastomeric compositions of the present invention. For example, the crosslinkable elastomeric compositions of the present invention can be used for manufacturing the tread band or the tread underlayer of the tyre. The process for producing the tyre may be carried out according to techniques and using apparatus that are known in the art, said process including manufacturing a green tyre, and subsequently moulding and vulcanising the green tyre. After the tyre has been built with at least one element comprising the crosslinkable elastomeric compositions of the present invention, it can be vulcanized using a normal tyre cure cycle. Tyres made in accordance with this invention can be cured over a wide temperature range. However, it is generally preferred for the tyres of this invention to be cured at a temperature ranging from about 130°C to 170°C (330 deg. F). Generally, the cure cycle used to vulcanize the tyres of this invention have a duration of from 10 to 30 minutes, preferably from 10 to 20 minutes.

In a third aspect, the present invention relates to a copolymerization process of an olefin monomer with a 4,4'-disubstituted diene monomer comprising a homogeneous catalyst system, wherein said homogeneous catalyst system is a bisphenolate ligand system having the following general formula: 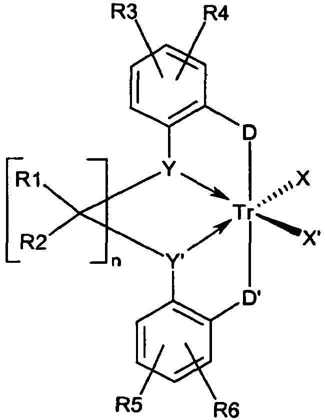 wherein
Tr is a transition metal,
X and X', equal or different each other, are a halogen atom, a linear or branched alkyl group having from 1 to 10 carbon atoms, a linear or branched alkenyl group having from 2 to 10 carbon atoms, an aryl group having from 6 to 14 carbon atoms, a linear or branched arylalkyl or alkylaryl group having from 1 to 10 carbon atoms in the alkyl portion and from 6 to 14 carbon atoms in the aryl portion, and a linear or branched alkoxy group having from 1 to 10 carbon atoms,
R₁ and R₂, equal or different each other, are an hydrogen atom or a linear or branched alkyl group having from 1 to 10 carbon atoms
R₃ to R₆, equal or different each other, are an hydrogen atom or a linear or branched alkyl group having from 1 to 10 carbon atoms,
Y and Y', equal or different each other, are an oxygen, sulfur, selenium, tellurium atom, or a NR₇ or PR₇ group,
D and D', equal or different each other, are an oxygen, sulfur, selenium, tellurium atom, or a NR₇ or PR₇ group,
R7 is an hydrogen atom or a linear or branched alkyl group having from 1 to 10 carbon atoms, and
n is an integer from 1 to 10.

Tr is preferably a transition metal selected from Ti, V, Cr, Mn, Fe, Co, Ni, Cu, Zr, Nb, Mo, Tc, Ru, Rh, Pd, Ce, Pr, Tb, Hf, Ta, W, Re, Os, lr, Pt, more preferably from the elements of the 3^{rd} group, and still more preferably from titanium and zirconium.

Preferably, X and X', equal each other, are a chloride or bromide atom, a linear or branched arylalkyl or alkylaryl group having from 1 to 10 carbon atoms in the alkyl portion and from 6 to 14 carbon atoms in the aryl portion, or a linear or branched alkoxy group having from 1 to 10 carbon atoms. More preferably, X and X' are a chloride atom, a benzyl group, or an isopropoxy group.

R₁ and R₂, equal or different each other, are preferably a hydrogen atom or linear or branched alkyl groups having from 1 to 6 carbon atoms, more preferably from 1 to 3 carbon atoms.

R₃ to R₆, equal or different each other, are preferably a hydrogen atom or a linear or branched alkyl group having from 1 to 6 carbon atoms, more preferably from 1 to 4 carbon atoms.

Preferably, Y and Y' are equal each other and selected from oxygen and sulfur. More preferably, Y and Y' are both sulfur.

Preferably, D and D' are equal each other and selected from oxygen and sulfur. More preferably, D and D' are both oxygen.

R₇ is preferably an hydrogen atom or a linear or branched alkyl group having from 1 to 6 carbon atoms, more preferably from 1 to 3 carbon atoms.

n is preferably an integer from 1 to 5..

According to the most preferred embodiment of the present invention, homogeneous catalyst system is a bisphenolate ligand system having the following formula:

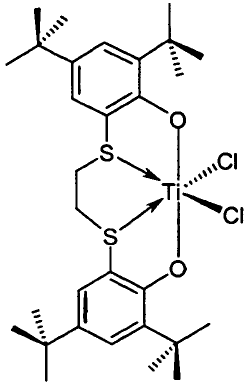

The copolymerization process of the present invention can be carried out either in bulk or in solution. If the process is carried out in solution, preference is given to using aprotic solvents. For example, it is possible to use aliphatic hydrocarbons such as pentane, hexane or cyclohexane, aromatic hydrocarbons such as benzene, toluene, xylene or ethylbenzene or halogenated hydrocarbons such as dichloromethane. Preference is given to using aromatic hydrocarbons, in particular toluene. Of course, it is also possible to use any mixtures of the abovementioned solvents.

The starting concentration of each comonomer added is generally set to a value in the range from 0.001 to 10 mol/l, preferably from 0.01 to 8 mol/l. The copolymerization temperature can be varied over a wide range. The temperature chosen is usually in the range from 0 to 100°C, and particularly preferably in the range from 10 to 40°C. Preferably, the copolymerization process is run at room temperature. The polymerization time for the processes of the present invention is generally in the range from 15 minutes to 75 hours, preferably from 30 minutes to 30 hours.

The polymerization reaction can be carried out at pressures in the range from 0.1 to 10 atm. The polymerization is usually carried out at pressures in the range from 0.5 to 5 atm. Preferably, the copolymerization process is carried out under atmospheric pressure.

The copolymerization process of the present invention is preferably carried out under inert reaction conditions, i.e. with exclusion of oxygen and moisture. If desired, a protective gas such as argon or nitrogen can be used. Most preferably, when the olefin monomer is gaseous, such as ethylene, copolymerization processes of the present invention is carried out under atmosphere of such an olefin monomer.

The polymerization reaction is started by adding the catalyst system to the mixture of comonomers. The catalyst system can be added as such or in dissolved form.

The copolymerization process of the present invention preferably comprises the use of an activators. Suitable activators include alumoxane and alkylaluminum compounds. Examples of suitable alumoxane compounds include methyl alumoxane (MAO), polymeric MAO (PMAO), ethyl alumoxane, diisobutyl alumoxane, and the like. Examples of suitable alkylaluminum compounds include triethylaluminum, diethyl aluminum chloride, trimethylaluminum, and triisobutyl aluminum. Suitable alumoxane compounds also include those that are modified. Methods for the modification of alumoxanes are known. For instance, U.S. Pat. No. 4,990,640 teaches the modification of alumoxanes with active hydrogen-containing compounds such as ethylene glycol. U.S. Pat. No. 6,340,771 teaches modifying MAO with sugar to make "sweet" MAO. Also, U.S. Pat. No. 5,543,377 teaches modifying alumoxanes with ketoalcohols and β-diketones.

The copolymerization process of the present invention is typically stopped by addition of a protic compound, for example a low molecular weight alcohol such as methanol, ethanol or i-propanol, or by simply removing the solvent. The copolymer formed is generally obtained as a solid and can be recovered from the organic solvent by standard techniques, such as decantation, filtration, centrifugation, and the like. After the copolymer is recovered, conventional purifying method, like washing or steam stripping, known in the art are employed to reduce the level of impurities, like volatile organic compounds.

The following examples merely illustrate the invention. Those skilled in the art will recognize many variations that are within the spirit of the invention and scope of the claims.

### EXAMPLE 1

### Synthesis of 1,2-dithiaethanediyl-2,2'-bis(4,6-di-tert-butyl-phenol) titanium chloride

### 1^{st} step : Synthesis of 2,2'-trithiobis(4,6-di-tert-butylphenol)

Sulfur monochloride (62.45g, 0.5 mol) was added to a solution of 2,4-di-tert-butylphenol (190.83g, 0.9 mol) in toluene (650 ml) at a temperature of 5°C until starting of the reaction with development of hydrochloric acid. The reaction mixture was cooled between -5° and -10°C before completing the addition of sulfur monochloride, and then was left overnight under stirring at room temperature.

The reaction mixture was extracted twice with diluted hydrochloric acid (460 ml of 1:1 concentrated hydrochloric acid:water), then once with a solution of sodium bicarbonate and water, and finally once with water. The organic phase was dried with sodium sulfate, and then the solvent was removed under vacuum. The residue was recrystallized twice from acetonitrile to give 52.1 g of white solid (yield 22% by weight).

### 2^{nd} step : Synthesis of 3,5-di-tert-butyl-2-hydroxybenzenethiol)

Zinc metal powder (133g, 2.0 mol) was added in little portions along two days to a mixture of 2,2'-trithiobis(4,6-di-tert-butylphenol) (18.8g, 36 mmol), concentrated hydrochloric acid (1.7 1, 3 mol), toluene (420 ml) and ethanol (210 ml). The organic phase was separated and washed with water. The organic phase was dried with sodium sulfate, and then the solvent was removed under vacuum to give 9.96g of white powder (yield 57% by weight).

### 3^{rd} step : Synthesis of 1,2-dithiaethanediyl-2,2'-bis(4,6-di-tert-butyl-phenol)

A solution of 3,5-di-tert-butyl-2-hydroxybenzenethiol) (9.96g, 4.2 mmol) in methanol (18 ml) was poured in a 100 ml flask, NaOH (1.7g, 4.3 mmol) was added to the solution, and the resulting mixture was refluxed until complete dissolution of NaOH, and then put in an ice-water bath. 1,2-dibromoethane (1.8g, 2 mmol) was slowly added, and then the resulting mixture was refluxed for one hour. After complete evaporation of the solvent, water was added until complete dissolution of NaBr. The organic phase was separated, and the aqueous phase was extracted twice with ether. The organic phase was dried with sodium sulfate, and then the solvent was removed under vacuum. The solid residue was dissolved in acetone and recrystallized from a mixture 1:1 of acetone:acetonitrile to give 4.94g of colorless crystals (yield 50% by weight).

### 4^{th} step : Synthesis of dichloro[1,2-dithiaethanediyl-2,2'-bis(4,6-di-tert-butylphenol)] titanium complex

Titanium tetrachloride (9.3g, 9.7 mmol) was added under stirring to a solution of 1,2-dithiaethanediyl-2,2'-bis(4,6-di-tert-butyl-phenol) (4.7g, 9.3 mmol) in toluene (50 ml). The solution turned immediately red with development of hydrochloric acid. The reaction mixture was left under stirring for two hours. After that, the solvent was removed under vacuum, and the red solid residue was washed twice with fresh hexane to give 5.8g of the final product (yield 99% by weight).

### EXAMPLE 2

### Copolymerization of ethylene and 4-methyl-1,3-pentadiene in the presence of the catalyst dichloro[1,2-dithiaethanediyl-2,2'-bis(4,6-di-tert-butyl-phenol)] titanium complex

### General procedure

5 ml of a 2M toluene solution of methylaluminoxane, and 4-methyl-1,3-pentadiene were added in this order into a 100 ml flask provided with magnetic stirrer. The resulting mixture was saturated with ethylene and maintained under continued feeding of ethylene (1 atm). The copolymerization reaction is started by injection of 1ml of a toluene solution containing 1x10⁻⁵ moles of catalyst. The copolymerization reaction was stopped at the time indicated in the following table 1 for each sample. The resulting polymer was recovered by filtration, washed several times with fresh ethanol, and dried under vacuum at room temperature until constant weight.

The above described general procedure was repeated five times with the amounts of 4-methyl-1,3-pentadiene and the stopping times indicated in Table 1, which also provides the molar content of 4-methyl-1,3-pentadiene (4-MPD) in the resulting copolymer samples and the yield thereof.

**Table 1**

| Sample | % mol 4-MPD in flask | Stopping time | % mol 4-MPD in copolymer | Yield (g) |
|---|---|---|---|---|
| 1 | 99 | 24 hrs | 87.5 | 1.49 |
| 2 | 92 | 110 min | 42.5 | 3.60 |
| 3 | 50 | 120 min | 46 | 0.20 |
| 4 | 60 | 45 min | 36 | 1.78 |
| 5 | 69 | 120 min | 51 | 0.70 |

The resulting copolymer samples 1 to 5 together with a reference homopolymer of ethylene (Ref. A) and a reference homopolymer of 4-methyl-1,3-pentadiene (Ref. B) were characterized by GPC, DSC, and NMR. The average molecular weights (both Mw and Mn) were determined by gel permeation chromatography (GPC). Glass transition temperatures were determined by differential scanning calorimetry (DSC). The polymer microstructures were determined by nuclear magnetic resonance spectrometry (NMR). The details of the analytical methods and the results thereof are reported below.

### GPC analysis

The GPC analysis was conducted with a GPC Waters 1525 apparatus working at 35°C. A solution of each sample (2.5 mg) in 1 ml of anhydrous THF was injected into the apparatus. The resulting values of Mw and distribution ratio Mw/Mn are reported in the following Table 2.

### DSC analysis

The DSC analysis was conducted with a differential scanning calorimeter TA Instrument DSC 2920 with a heating and cooling speed of 10°C/min. The operating conditions consisted in a first cooling phase from room temperature to -100°C, a first heating phase from -100°C to 200°C, a second cooling phase from 200°C to -100°C, and a final heating phase from -100°C to room temperature. The resulting values of Tg and Tmp are reported in the following Table 2.

**Table 2**

| Sample | Mw (10⁴) | Mw/Mn | Tg | Tmp |
|---|---|---|---|---|
| Ref. B | 5.7 | - | 11.4 | 146 |
| 1 | 2.2 | 1.41 | 8.1 | 126 |
| 2 | 0.7 | 1.38 | 54 | 109 |
| 3 | 1 | 1.53 | 52 | 112 |
| 4 | 0.8 | 1.64 | 53 | 110 |
| 5 | 0.7 | 1.42 | 54 | 108 |
| Ref. A | 9.5 | 1.80 | - | 118 |

### NMR analysis

The NMR analysis was conducted with a spectrometer Bruker Avance 250 at 62.89 MHz for ¹³C NMR. A solution of each sample (30 mg) in 0.25 ml of tetrachloro-1,2-dideuteroethane (TCDE) was injected into the apparatus. The chemical shift were reported in ppm and normalized with TMS (internal standard). The chemical shifts of samples 1 to 5 are reported in the following Table 3 together with the chemical shifts of a isotactic 1,2-poly(4-methyl-1,3-pentadiene) prepared according to A. Proto et al, "Synthesis of Isotactic Poly 1,2-(4-methyl-1,3-pentadiene) by a Homogeneous Titanium Catalyst', Macromolecules. 2003, 36, 9249-9251.

**TABLE 3**

| Carbon atom | Chemical Shift (δ ppm) | Chemical shifts (δ ppm) | | | | | |
|---|---|---|---|---|---|---|---|
| | | Reference B | 1 | 4 | 3 | 4 | 5 |
| 1 | 42.00 | X | X | | | | |
| 2 | 33.69 | X | X | | | | |
| 3 | 25.81 | X | X | X | X | X | X |
| 4 | 18.11 | X | X | X | X | X | X |
| 5 | 37.85 | | X | X | X | X | X |
| 6 | 36.26 | | X | X | X | X | X |
| 7 | 25.00 | | X | X | X | X | X |
| 8 | 29.72 | | | | | X | X |
| 9 | 27.43 | | | | | X | X |

In Table 3, the sign "X" means that the corresponding carbon atom was noticed by the presence of the corresponding chemical shift in the ¹³C NMR spectra, while the empty cell means that corresponding carbon type was absent (no chemical shift at the expected value).

The chemical shifts reported in Table 3 correspond to the carbon atoms indicated in the following schemes.

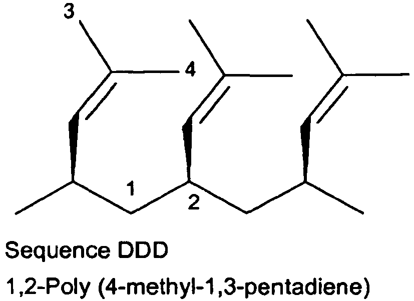

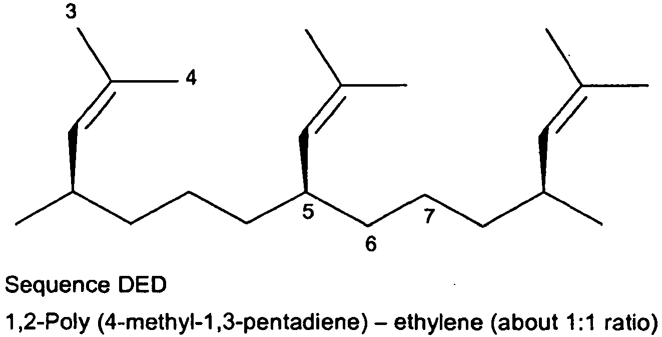

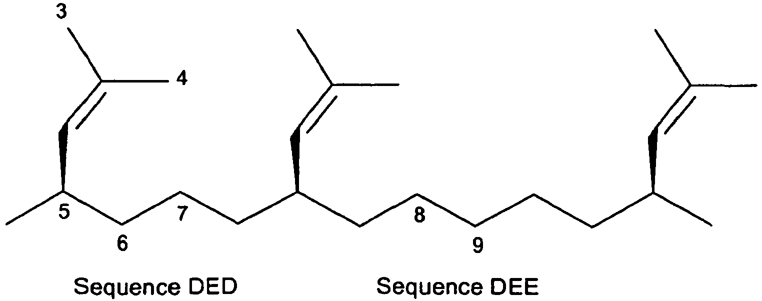

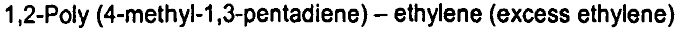

The assignments of the above described chemical shifts to the carbon atoms of the above schemes confirmed that the copolymer of the present invention has an isotactic configuration resulting from a 1,2-addition of the 4-methyl-1,3-pentadiene.

In fact, the sharp signals of C3 and C4, characteristic of the isobutenyl groups produced by chemoselective homopolymerization of 4-methyl-1,3-pentadiene involving only the less substituted double bond, are also present in the resulting copolymer of the present invention.

The substantial identity of the values and shapes of the sharp signals of C3 and C4 in the reference sample and the samples 1 to 5 is the strong indication that the copolymers of the present invention are all in the isotactic configuration, wherein all the isobutenyl groups are oriented on the same side of the polymeric chain.

On the contrary, the sharp signals of C1 and C2, relative to a 4-methyl-1,3-pentadiene homosequence, are not present in the copolymer, thus meaning that all the 4-methyl-1,3-pentadiene units are alternated with an ethylene unit (sequence DED).

This is confirmed by the presence of the sharp signals of C6 and C7, absent in the homopolymer of 4-methyl-1,3-pentadiene. The presence of a certain amount of two ethylene units between two 4-methyl-1,3-pentadiene units (sequence DEE), characterized by the presence of the signals of C8 and C9, was only noticed working with an excess of ethylene in copolymer samples 4 and 5.

## Claims

1. A tyre comprising at least one structural element obtained by crosslinking a crosslinkable elastomeric composition comprising an olefin diene copolymer, wherein said olefin diene copolymer comprises an olefin monomer and a 4,4'-disubstituted diene monomer, and wherein more than 50% of said 4,4'-disubstituted diene monomer units are linked in the polymeric chain in the 1,2-configuration as determined by NMR.

2. The tyre according to claim 1, wherein more than 80% of the substituted alkylene groups pendant from the polymeric chain have a isotactic configuration as determined by NMR.

3. The tyre according to claim 2, wherein said olefin diene copolymer comprises from 5 to 95 molar percent of an olefin monomer and from 95 to 5 molar percent of a 4,4'-disubstituted diene monomer.

4. The tyre according to claim 1, wherein said at least one structural element obtained by crosslinking a crosslinkable elastomeric composition comprising said olefin diene copolymer is the tread band or the side walls.

5. A crosslinkable elastomeric composition comprising an olefin diene copolymer as defined in any one of the preceding claims.

6. A copolymerization process of an olefin monomer with a 4,4'-disubstituted diene monomer comprising a homogeneous catalyst system, wherein said homogeneous catalyst system is a bisphenolate ligand system having the following general formula: 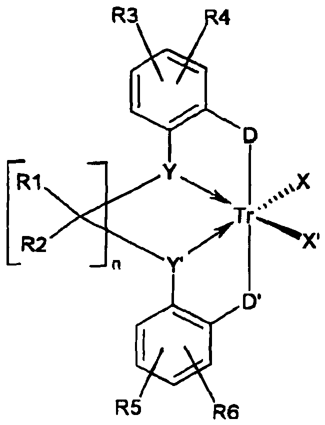 wherein
Tr is a transition metal,
X and X', equal or different each other, are a halogen atom, a linear or branched alkyl group having from 1 to 10 carbon atoms, a linear or branched alkenyl group having from 2 to 10 carbon atoms, an aryl group having from 6 to 14 carbon atoms, a linear or branched arylalkyl or alkylaryl group having from 1 to 10 carbon atoms In the alkyl portion and from 6 to 14 carbon atoms in the aryl portion, and a linear or branched alkoxy group having from 1 to 10 carbon atoms,
R₁ and R₂, equal or different each other, are an hydrogen atom or a linear or branched alkyl group having from 1 to 10 carbon atoms
R₃ to R₆, equal or different each other, are an hydrogen atom or a linear or branched alkyl group having from 1 to 10 carbon atoms,
Y and Y', equal or different each other, are an oxygen, sulfur, selenium, tellurium atom, or a NR₇ or PR₇ group,
D and D', equal or different each other, are an oxygen, sulfur, selenium, tellurium atom, or a NR₇ or PR₇ group,
R₇ is an hydrogen atom or a linear or branched alkyl group having from 1 to 10 carbon atoms, and
n is an integer from 1 to 10.

7. The copolymerization process of claim 6, wherein said homogeneous catalyst system is a bisphenolate ligand system having the following formula:

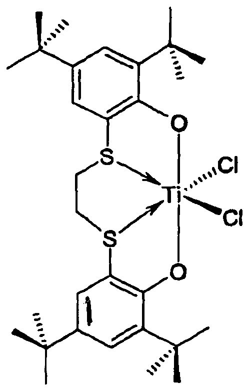

8. Use of a bisphenolate ligand system as defined in any one of claims 6 to 7 in a copolymerization process of an olefin monomer with a 4,4'-dlsubstituted diene monomer.

9. An olefin diene copolymer comprising an olefin monomer and a 4,4'-disubstituted diene monomer, wherein more than 50% of said 4,4'-disubstituted diene monomer units are linked in the polymeric chain in the 1,2-configuration and wherein more than 80% of the substituted alkylene groups pendant from the polymeric chain have a isotactic configuration.

10. The olefin diene copolymer according to claim 9, wherein said olefin monomer is selected from the group consisting of ethylene, propylene, 1-butene, 1-pentene, 1-hexene, 1-octene, and mixtures thereof.

11. The olefin diene copolymer according to claim 9, wherein said olefin monomer is ethylene.

12. The olefin diene copolymer according to claim 9, wherein said 4,4'-disubstituted diene monomer is represented by the following general formula: 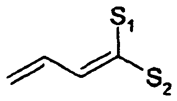 wherein S₁ and S₂, equal or different each other, are selected from non-polar atoms and non-polar organic groups.

13. The olefin diene copolymer according to claim 12, wherein said 4,4'-disubstituted diene monomers is selected from the group consisting of 4,4'-dichloro-1,3-butadiene, 4,4'-dibromo-1,3-butadiene, 4-chloro-1,3-pentadiene, 4-methyl-1,3-pentadiene, 4-methoxy-1,3-pentadiene, 4-methylthio-1,3-pentadiene, 4-methylamino-1,3-pentadiene, 4-cyclohexyl-1,3-pentadiene, 4-methyl-1,3-hexadiene, 4-ethyl-1,3-hexadiene, 4-ethyl-1,3 heptadiene, 4-butyl-1,3-octadiene, or mixtures thereof.

14. The olefin diene copolymer according to claim 12, wherein said 4,4'-disubstituted diene monomers is 4-methyh-1,3-pentadiene.

15. The olefin diene copolymer according to any one of the preceding claims 9 to 14, wherein said olefin diene copolymer shows a glass transition temperature (Tg) ranges from -20°C to 90°C.

16. The olefin diene copolymer according to any one of the preceding claims 9 to 15, wherein said olefin diene copolymer shows a weight average molecular weight (Mw) within the range of from 1x10³ to 1x10⁵.

17. The olefin diene copolymer according to any one of the preceding claims 9 to 16, wherein said copolymer comprises from 5 to 95 molar percent of an olefin monomer and from 95 to 5 molar percent of 4,4'-disubstituted diene monomer.

## Patentansprüche

1. Reifen, der mindestens ein Strukturelement umfasst, das durch Vernetzen einer vernetzbaren Elastomerzusammensetzung erhalten wird, die ein Olefin-Dien-Copolymer umfasst, worin das Olefin-Dien-Copolymer ein Olefinmonomer und ein 4,4'-disubstituiertes Dienmonomer umfasst, und worin mehr als 50 % des 4,4'-disubstituierten Dienmonomereinheiten in der Polymerkette in der 1,2-Konfiguration verknüpft sind, wie durch NMR bestimmt.

2. Reifen gemäß Anspruch 1, worin mehr als 80 % der substituierten Alkylengruppen, die von der Polymerkette abstehen, eine isotaktische Konfiguration haben wie durch NMR bestimmt.

3. Reifen gemäß Anspruch 2, worin das Olefin-Dien-Copolymer 5 bis 95 mol% eines Olefinmonomers und 95 bis 5 mol% eines 4,4'-disubstituierten Dienmonomers umfasst.

4. Reifen gemäß Anspruch 1, worin das mindestens eine Strukturelement, das durch Vernetzen einer vernetzbaren Elastomerzusammensetzung erhalten wird, die das Olefin-Dien-Copolymer umfasst, das Laufflächenband oder die Seitenwände sind.

5. Vernetzbare Elastomerzusammensetzung, die ein Olefin-Dien-Copolymer umfasst, wie in irgendeinem der vorhergehenden Ansprüche definiert.

6. Copolymerisierungsverfahren eines Olefinmonomers mit einem 4,4'-disubstituierten Dienmonomer, das ein homogenes Katalysatorsystem umfasst, worin das homogene Katalysatorsystem ein Bisphenolat-Ligandsystem mit der folgenden allgemeinen Formel ist: 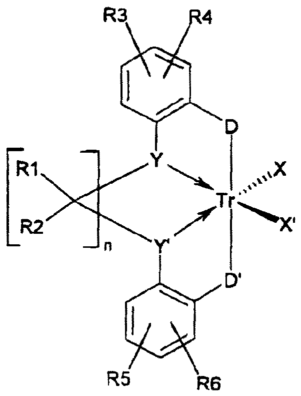 worin Tr ein Übergangsmetall ist,
X und X', die gleich oder unterschiedlich voneinander sind, ein Halogenatom, eine lineare oder verzweigte Alkylgruppe mit 1 bis 10 Kohlenstoffatomen, eine lineare oder verzweigte Alkenylgruppe mit 2 bis 10 Kohlenstoffatomen, eine Arylgruppe mit 6 bis 14 Kohlenstoffatomen, eine lineare oder verzweigte Arylalkyl- oder Alkylarylgruppe mit 1 bis 10 Kohlenstoffatomen im Alkylabschnitt und 6 bis 14 Kohlenstoffatomen im Arylabschnitt und eine lineare oder verzweigte Alkoxygruppe mit 1 bis 10 Kohlenstoffatomen sind,
R₁ und R₂, die gleich oder unterschiedlich voneinander sind, ein Wasserstoffatom oder eine lineare oder verzweigte Alkylgruppe mit 1 bis 10 Kohlenstoffatomen sind,
R₃ bis R₆, die gleich oder unterschiedlich voneinander sind, ein Wasserstoffatom oder eine lineare oder verzweigte Alkylgruppe mit 1 bis 10 Kohlenstoffatomen sind,
Y und Y', die gleich oder unterschiedlich voneinander sind, ein Sauerstoff-, Schwefel-, Selen-, Telluratom oder eine NMR₇- oder PR₇-Cruppe sind,
D und D', die gleich oder unterschiedlich voneinander sind, ein Sauerstoff-, Schwefel-, Selen-, Telluratom oder eine NMR₇- oder PR₇-Cruppe sind,
R⁷ ein Wasserstoffatom oder eine lineare oder verzweigte Alkylgruppe mit 1 bis 10 Kohlenstoffatomen ist, und
n eine ganze Zahl von 1 bis 10 ist.

7. Copolymerisierungsverfahren gemäß Anspruch 6, worin das homogene Katalysatorsystem ein Bisphenolat-Ligandensystem mit der folgenden Formel ist:

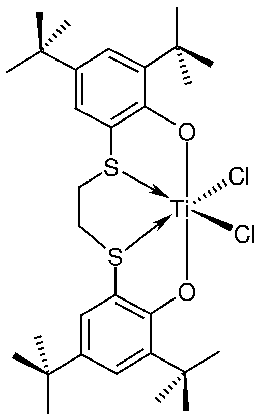

8. Verwendung eines Bisphenolat-Ligandensystems wie in irgendeinem der Ansprüche 6 bis 7 definiert, in einem Copolymerisierungsverfahren eines Olefinmonomers mit einem 4,4'-disubstituierten Dienmonomer.

9. Olefin-Dien-Copolymer, das ein Olefinmonomer und ein 4,4'-disubstituiertes Dienmonomer umfasst, worin mehr als 50 % der 4,4'-disubstituierten Dienmonomereinheiten in der Polymerkette in der 1,2-Konfiguration verknüpft sind, und worin mehr als 80 % der substituierten Alkylengruppen, die von der Polymerkette abstehen, eine isotaktische Konfiguration haben.

10. Olefin-Dien-Copolymer gemäß Anspruch 9, worin das Olefinmonomer aus der Gruppe bestehend aus Ethylen, Propylen, 1-Buten, 1-Penten, 1-Hexen, 1-Octen und Mischungen daraus ausgewählt ist.

11. Olefin-Dien-Copolymer gemäß Anspruch 9, worin das Olefinmonomer Ethylen ist.

12. Olefin-Dien-Copolymer gemäß Anspruch 9, worin das 4,4'-disubstituierte Dienmonomer durch die folgende allgemeine Formel dargestellt wird: 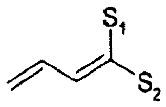 worin S₁ und S₂, die gleich oder unterschiedlich voneinander sind, aus unpolaren Atomen und unpolaren organischen Gruppen ausgewählt sind.

13. Olefin-Dien-Copolymer gemäß Anspruch 12, worin das 4,4'-disubstituierte Dienmonomer aus der Gruppe ausgewählt ist, die aus 4,4'-Dichloro-1,3-butadien, 4,4'-Dibromo-1,3-butadien, 4-Chloro-1,3-pentadien, 4-Methyl-1,3-pentadien, 4-Methoxy-1,3-pentadien, 4-Methylthio-1,3-pentadien, 4-Methylamino-1,3-pentadien, 4-Cyclohexyl-1,3-pentadien, 4-Methyl-1,3-hexadien, 4-Ethyl-1,3-hexadien, 4-Ethyl-1,3-heptadien, 4-Butyl-1,3-octadien oder Mischungen daraus ausgewählt ist.

14. Olefin-Dien-Copolymer gemäß Anspruch 12, worin das 4,4'-disubstituierte Dienmonomer 4-Methyl-1,3-pentadien ist.

15. Olefin-Dien-Copolymer gemäß irgendeinem der vorhergehenden Ansprüche 9 bis 14, worin das Olefin-Dien-Copolymer eine Glasübergangstemperatur (Tg) im Bereich von -20°C bis 90°C zeigt.

16. Olefin-Dien-Copolymer gemäß irgendeinem der vorhergehenden Ansprüche 9 bis 15, worin das Olefin-Dien-Copolymer ein gewichtsgemitteltes Molekulargewicht (Mw) im Bereich von 1 x 10³ bis 1 x 10⁵ zeigt.

17. Olefin-Dien-Copolymer gemäß irgendeinem der vorhergehenden Ansprüche 9 bis 16, worin das Copolymer 5 bis 95 mol% eines Olefinmonomers und 95 bis 5 mol% eines 4,4'-disubstituierten Dienmonomers umfasst.

## Revendications

1. Pneumatique comprenant au moins un élément de structure obtenu par réticulation d'une composition élastomère réticulable comprenant un copolymère oléfine-diène, **caractérisé en ce que** ledit copolymère oléfine-diène comprend un monomère d'oléfine and et un monomère diène 4,4'-disubstitué, et dans lequel plus de 50 % desdites unités monomères diènes 4,4'-disubstituées sont liées à la chaine polymérique dans la configuration 1,2 comme déterminé par RMN.

2. Pneumatique selon la revendication 1, **caractérisé en ce que** plus de 80% des groupes alkylènes pendants substitués de la chaine polymérique ont une configuration isotactique comme déterminé par RMN.

3. Pneumatique selon la revendication 2, **caractérisé en ce que** ledit copolymère oléfine-diène comprend de 5 à 95 % en moles d'un monomère d'oléfine et de 95 à 5 % en moles d'un monomère diène 4,4'-disubstitué.

4. Pneumatique selon la revendication 1, **caractérisé en ce que** ledit élément de structure obtenu par réticulation d'une composition élastomère réticulable comprenant ledit copolymère oléfine diène correspond à la bande de roulement ou aux flancs.

5. Composition élastomère réticulable comprenant un copolymère oléfine-diène tel que défini dans l'une quelconque des revendications précédentes.

6. Procédé de copolymérisation d'un monomère d'oléfine avec un monomère diène 4,4'-disubstitué comprenant un système catalytique homogène, **caractérisé en ce que** ledit système catalytique homogène est un système de ligand bisphénolate de formule générale suivante : 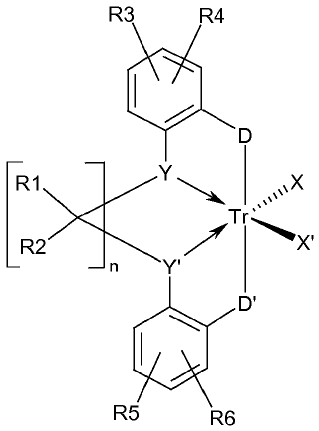 dans laquelle :
Tr est un métal de transition,
X et X', identiques ou différents l'un de l'autre, sont un atome d'halogène, un groupe alkyle linéaire ou ramifié avec 1 à 10 atomes de carbone, un groupe alcényle linéaire ou ramifié avec 2 à 10 atomes de carbone, un groupe aryle avec 6 à 14 atomes de carbone, un groupe arylalkyle ou alkylaryle linéaire ou ramifié avec 1 à 10 atomes de carbone dans la portion alkyle et 6 à 14 atomes de carbone dans la portion aryle, et un groupe alcoxy linéaire ou ramifié avec 1 à 10 atomes de carbone,
R₁ et R₂, identiques ou différents l'un de l'autre, sont un atome d'hydrogène ou un groupe alkyle linéaire ou ramifié avec 1 à 10 atomes de carbone,
R₃ à R₆, identiques ou différents l'un de l'autre, sont un atome d'hydrogène ou un groupe alkyle linéaire ou ramifié avec 1 à 10 atomes de carbone,
Y et Y', identiques ou différents l'un de l'autre, sont un atome d'oxygène, de soufre, de sélénium, de tellure ou un groupe NR₇ ou PR₇,
D et D', identiques ou différents l'un de l'autre, sont un atome d'oxygène, de soufre, de sélénium, de tellure ou un groupe NR₇ ou PR₇,
R₇ est un atome d'hydrogène ou un groupe alkyle linéaire ou ramifié avec 1 à 10 atomes de carbone, et
n est un entier compris entre 1 et 10.

7. Procédé de copolymérisation selon la revendication 6, **caractérisé en ce que** ledit système de catalyse homogène est un système ligand bisphénolate de formule suivante :

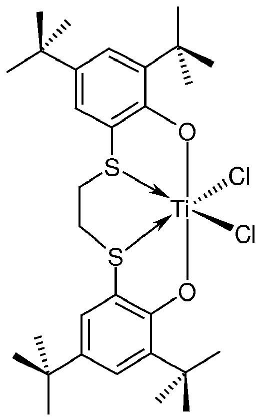

8. Utilisation d'un système ligand bisphénolate tel que défini dans l'une des revendications 6 à 7 dans un procédé de copolymérisation d'un monomère d'oléfine avec un monomère diène 4,4'-disubstitué.

9. Copolymère oléfine-diène comprenant un monomère d'oléfine et un monomère diène 4,4'-disubstitué, **caractérisé en ce que** plus de 50% des unités dudit monomère diène 4,4'-disubstitué sont liés à la chaine polymérique dans la configuration 1,2, et dans lequel plus de 80% des groupes alkylènes pendants substitués de la chaine polymérique ont une configuration isotactique.

10. Copolymère oléfine-diène selon la revendication 9 **caractérisé en ce que** ledit monomère d'oléfine est choisi dans le groupe comprenant l'éthylène, le propylène, le 1-butène, le 1-pentène, le 1-héxène, le 1-octène, et leurs mélanges.

11. Copolymère oléfine-diène selon la revendication 9 **caractérisé en ce que** ledit monomère d'oléfine est l'éthylène.

12. Copolymère oléfine-diène selon la revendication 9, **caractérisé en ce que** ledit monomère diène 4,4'-disubstitué est représenté par la formule générale suivante : 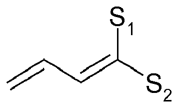 dans laquelle S₁ et S₂ identiques ou différents l'un de l'autre, sont choisis parmi des atomes non polaires et des groupes organiques non polaires.

13. Copolymère oléfine-diène selon la revendication 12, **caractérisé en ce que** ledit monomère diène 4,4'-disubstitué est choisi dans le groupe comprenant le 4,4'-dichloro-1,3-butadiène, le 4,4'-dibromo-1,3-butadiène, le 4-chloro-1,3-pentadiène, le 4-méthyl-1,3-pentadiène, le 4-méthoxy-1,3-pentadiène, le 4-méthylthio-1,3-pentadiène, le 4-méthylamino-1,3-pentadiène, le 4-cyclohexyl-1,3-pentadiène, le 4-méthyl-1,3-hexadiène, le 4-éthyl-1,3-hexadiène, le 4-éthyl-1,3-heptadiène, le 4-butyl-1,3-octadiène, et leurs mélanges.

14. Copolymère oléfine-diène selon la revendication 12, **caractérisé en ce que** ledit monomère diène 4,4'-disubstitué est le 4-méthyl-1,3-pentadiène.

15. Copolymère oléfine-diène selon l'une quelconque des revendications 9 à 14, **caractérisé en ce que** ledit copolymère oléfine-diène présente une température de transition vitreuse (Tg) comprise entre -20°C et 90°C.

16. Copolymère oléfine-diène selon l'une quelconque des revendications précédentes 9 à 15, **caractérisé en ce que** ledit copolymère oléfine-diène présente une mase moléculaire moyenne en poids (Mw) comprise entre 1x10³ et 1X10⁵.

17. Copolymère oléfine-diène selon l'une quelconque des revendications précédentes 9 à 16, **caractérisé en ce que** ledit copolymère comprend de 5 à 95 % en moles d'un monomère d'oléfine et de 95 à 5 % en moles d'un monomère diène 4,4'-disubstitué.
